# FASCICULE DE BREVET EUROPEEN

(11) **EP 1 010 326 B1**
(45) Date de publication et mention de la délivrance du brevet: **07.11.2001**
(21) Numéro de dépôt: 98942810.7
(22) Date de dépôt: 02.09.1998
(51) Int. Cl.: H04N 7/16, H04N 7/167

(54) **PROCEDE ET INSTALLATION DE TELECHARGEMENT D'UNE PLATEFORME DE DECODEUR D'USAGER**
VERFAHREN UND ANLAGE ZUR FERNLADUNG VERSCHIEDENER BENUTZERDEKODER
METHOD AND INSTALLATION FOR UPLOADING A USER'S DECODER PLATFORM

(30) Priorité: 04.09.1997 FR 9711014
(43) Date de publication de la demande: 21.06.2000
(73) Titulaire: SAGEM S.A., 75016 Paris (FR)
(72) Inventeur: CHEVREUL, Jean-Jacques, F-78360 Montesson (FR); PONS, Michel, F-95290 l'Isle Adam (FR)
(74) Mandataire: Fort, Jacques
(86) Numéro de dépôt international: FR9801879
(87) Numéro de publication internationale: WO9912352

(56) Documents cités:
- US-A- 5 440 632
- US-A- 5 619 250

## Description

La présente invention concerne le domaine des décodeurs utilisés par les abonnés à la télévision numérique, notamment à accès conditionnel.

La plupart des opérateurs de télévision numérique diffusant actuellement en Europe proposent des décodeurs en location. Ces décodeurs permettent de recevoir la totalité des services d'un seul opérateur. A l'étranger, on trouve déjà des décodeurs en vente dans des réseaux de distribution. Mais chaque décodeur est dédié à un seul opérateur, ou à un groupe d'opérateurs bien déterminé et invariable. Le consommateur hésite à acheter ce produit, relativement coûteux, alors qu'il n'est pas certain d'apprécier le bouquet de programmes offert par l'opérateur ou alors qu'il sait que le décodeur qu'il acquiert sera inutilisable pour recevoir un bouquet apparaissant dans le futur.

L'augmentation continue du nombre des opérateurs de télévision et des services complémentaires qu'ils offrent, tels que guide de programme électronique, paiement à la séance, etc., rend cette situation de moins en moins acceptable pour l'usager.

Les plateformes matérielles des décodeurs de réception directe de télévision diffusée par satellite sont normalisées. En effet, La norme DVB de l'ETSI impose à tous les fabricants une structure matérielle commune aux décodeurs. De plus, elle prévoit optionnellement une interface commune permettant de connecter des modules de contrôle d'accès à des bouquets différents, sous forme d'une carte PCMCIA insérable dans un connecteur de décodeur. Cette solution est coûteuse. Elle exige une duplication de nombreuses fonctions. Si elle permet de recevoir des émissions de télévision provenant de plusieurs opérateurs en changeant la carte, elle ne donne généralement pas accès aux services associés.

Une difficulté supplémentaire provient de ce que les plateformes de réception d'un même bouquet peuvent provenir de plusieurs fournisseurs utilisant des matériels différents, ayant simplement un moteur d'application commun imposé par l'opérateur, tel que OPEN TV, MEDIA HIGHWAY, DAVID (Digital Audio-Video Intéracting Decoding), constituant une couche logicielle de niveau intermédiaire. Mais des opérateurs différents imposent généralement des moteurs d'application différents. Au surplus, une version ultérieure d'une même plateforme peut comporter des fonctionnalités supplémentaires, permettant l'accès à des services qui resteront à l'heure actuelle inaccessibles pour les possesseurs de versions antérieures.

Les documents US-A-5 440 632 et US-A-5 619 250, auxquels on pourra se reporter, décrivent des terminaux de télévision comprenant une plate-forme prévue pour télécharger des mises à jour du programme de commande du microprocesseur de tous les terminaux, de certains d'entre eux seulement, ou d'un seul. Mais ces documents n'envisagent pas la possibilité de permettre de passer d'un opérateur à un autre.

La présente invention vise notamment à fournir un procédé et un dispositif permettant de rendre une plateforme de décodeur banalisée apte à recevoir des émissions provenant d'opérateurs différents, qu'ils utilisent ou non le même mode de contrôle d'accès et/ou le même moteur d'application.

Dans ce but, l'invention propose notamment un procédé de téléchargement de logiciel d'application propre à un opérateur dans une plateforme banalisée de décodeur de télévision numérique, suivant la revendication 1.

Ainsi l'utilisateur peut sélectionner, initialement ou lors d'un chargement ultérieur, l'opérateur de son choix parmi une liste d'opérateurs ayant passé un accord avec le fabricant du décodeur, bien qu'ils puissent utiliser des langages (API) très différents les uns des autres pour décrire leurs applications ou services.

Ce procédé est complètement différent, dans sa structure et dans sa fonction, du simple téléchargement de mise à jour d'un logiciel complémentaire, réservé aux abonnés d'un seul opérateur. Il est également très différent de la simple transmission de messages de gestion de titres d'accès, dits EMM. Il permet en effet d'accéder à l'un quelconque de plusieurs bouquets différents, à partir d'une même plateforme, et ce de façon simple.

Deux cas différents peuvent se présenter ; ils peuvent l'un et l'autre être traités par mise en oeuvre de l'invention.

Le premier cas est celui de l'opérateur qui souhaite permettre à un usager disposant d'un décodeur d'abandonner le bouquet d'un concurrent en faveur du sien. Dans ce cas, l'usager résilie son abonnement au bouquet concurrent. Il s'abonne au nouveau bouquet par une démarche qui peut être classique et demande le téléchargement du logiciel d'application du bouquet qu'il veut recevoir. L'opérateur inclut dans la diffusion du logiciel les éléments de filtrage ne permettant qu'à ce possesseur de plateforme de mémoriser le programme. Puis l'utilisateur appelle, par exemple à l'aide de sa télécommande, le programme chargeur d'initialisation qui lui présente un menu permettant de saisir, de nouveau à l'aide de sa télécommande, les paramètres du transpondeur du bouquet qu'il veut recevoir. Il lance le processus de téléchargement, dont la durée dépend de la bande passante allouée par l'opérateur à cette fonctionnalité dans son émission.

Le logiciel d'application téléchargé est écrit dans une mémoire de programme. Elle peut être une mémoire flash, dont la durée d'écriture est longue. L'opérateur qui ne prévoit que cette possibilité peut se borner à ne transmettre le logiciel d'application permettant d'accéder à son bouquet que la nuit et sous forme de paquets successifs transmis à intervalles importants, ce qui n'obère que très peu le débit disponible pour la télévision et des données d'autre nature.

L'autre cas est celui où les opérateurs concurrents souhaitent autoriser le "zapping" entre bouquets par un abonné commun. Dans ce cas, il peut y avoir des téléchargements fréquents d'un programme d'application destiné à remplacer un programme mémorisé. Pour éviter une attente trop longue (due à la durée d'écriture dans une mémoire flash) les programmes seront alors stockés et exécutés dans une mémoire vive de programme qui remplacera ou accompagnera en frontal la mémoire flash. La présence d'une mémoire flash en plus d'une mémoire vive permet de conserver une version de programme sous forme non volatile. En cas d'absence de mémoire flash, un téléchargement sera effectué après toute coupure d'alimentation.

Il est possible de prévoir, en plus de téléchargements effectués à l'initiative de l'abonné, des téléchargements de mise à jour ou d'adjonction de fonctionnalités ayant un caractère obligatoire, pour tenir compte de modifications de l'exploitation.

Le procédé doit répondre à deux exigences. Il doit être sélectif, c'est-à-dire permettre de cibler certaines plateformes seulement ; il doit être efficace et permettre de désigner, dans un même message, toutes les plateformes qui doivent recevoir la même version de logiciel.

Ces deux fonctions peuvent être remplies par une opération qu'on peut qualifier de "filtrage", consistant à désigner, par les indications écrites soit dans l'en-tête d'un flux de téléchargement de logiciel, soit dans les tables d'information associées aux services (PSI et SI), les décodeurs concernés par ce flux. Pour cela, l'en-tête (ou les PSI/SI) peut comporter plusieurs champs définissant des caractéristiques qui sont également inscrites dans les plateformes. Ces caractéristiques peuvent être définitives, comme celles de la partie matérielle, et d'autres évolutives, comme celles de la partie logicielle.

L'invention propose également une installation de téléchargement de logiciel d'application dans des plateformes de décodeur de télévision numérique, comprenant :
- dans chaque plateforme, des moyens de sélection et d'extraction d'un flux de données représentant un logiciel d'application spécifique du bouquet offert par un opérateur et une mémoire programmable réinscriptible de stockage dudit logiciel, et de traitement pour commander la plateforme pour exploiter les services identifiés par le logiciel, et
- au niveau du diffuseur, des moyens pour insérer de façon répétitive, dans les données numériques diffusées d'une part, un flux de données représentant ledit logiciel d'application spécifique et d'autre part des informations décrivant les caractéristiques des seuls décodeurs destinés à recevoir le logiciel.

Les moyens de sélection et d'extraction peuvent être constitués par un module de traitement banalisé indépendant d'opérateur assurant l'ensemble des fonctions.

Dans une variante de réalisation, tout ou partie du programme (ou d'un logiciel d'accès à ce programme) peut être transmis par le réseau téléphonique, à condition que la plate-forme comporte des moyens de couplage à ce réseau. Toutefois cette complication ne sera généralement pas nécessaire, car la bande passante requise pour transmettre un programme d'application en un délai raisonnable reste faible. Si l'on considère par exemple le cas d'un opérateur utilisant un canal satellite ayant une largeur de 36 MHz et exploitant quatre transpondeurs, il suffit de consacrer 1 % du débit disponible, c'est-à-dire environ 1,2 Mbits/s, pour charger un logiciel moyen de 1 Mo en environ 8 secondes.

Si seul un changement exceptionnel de programme est envisagé, pour permettre un changement d'abonnement, la transmission peut s'effectuer avec un débit moyen extrêmement faible, qui n'a pas d'influence sensible sur la bande passante disponible.

Les caractéristiques ci-dessus ainsi que d'autres apparaîtront mieux à la lecture de la description qui suit d'un mode particulier de réalisation, donné à titre d'exemple non limitatif. La description se réfère aux dessins qui l'accompagnent, dans lesquels :
- la figure 1 est un schéma de principe de l'architecture matérielle d'une plateforme d'un décodeur associé à un poste de télévision ;
- la figure 2 est un schéma du téléchargement ;
- la figure 3 montre une constitution possible d'en-tête (ou de descriptif privé dans une table PSI ou SI) permettant un filtrage ;
- la figure 4 montre une séquence de chargement.
- la figure 5 est un schéma indiquant un mode possible de gestion des clés.

L'invention sera essentiellement décrite dans son application à un décodeur de réception de signaux de télévision numérique de type MPEG2, constitués par un multiplex formé de paquets successifs. Les paquets transportent :
- les composantes audio et vidéo,
- des données numériques, parmi lesquelles seront inclus les logiciels à télécharger.

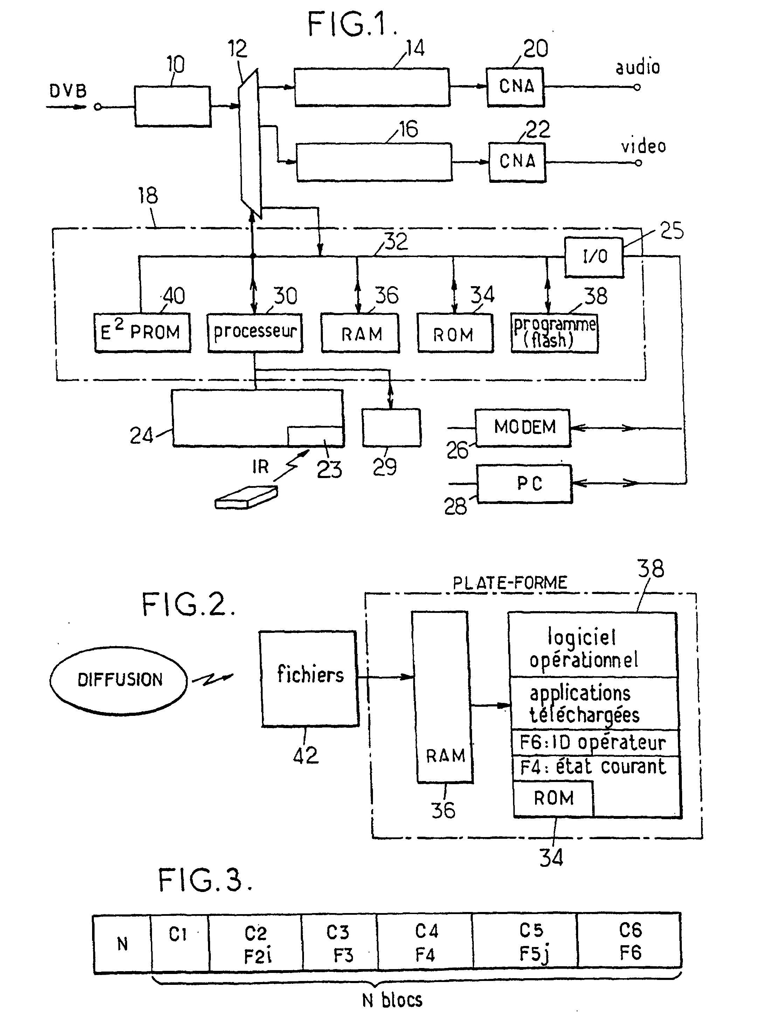

L'architecture de la plateforme d'un décodeur est généralement celle schématisée en figure 1. Elle comporte :
- une interface de réseau 10, assurant les fonctions de réception et de démodulation, dont la constitution dépend du réseau (réseau terrestre câblé, diffusion directe par satellite, réseau hertzien) ;
- un démultiplexeur temporel 12 effectuant aussi le désembrouillage, séparant les composantes du signal reçu ;
- des décodeurs audio 14 et vidéo 16 ;
- un module 18 de traitement de données et de gestion du décodeur.

Le démultiplexeur 12 fonctionne sous la dépendance du module 18. Il dirige les paquets vidéo vers le décodeur vidéo 14, les paquets audio vers le décodeur audio 16 et les données vers le module 18. Il désembrouille les composantes qui ont été embrouillées par le contrôle d'accès à l'émission.

Les décodeurs audio 14 et vidéo 16 assurent la décompression MPEG2 et délivrent l'information numérique décompressée à des convertisseurs numérique-analogique 20 et 22 d'où sortent des signaux audio et vidéo exploitables par un téléviseur.

Le module 18 gère l'ensemble des éléments internes au décodeur et également des éléments d'interface utilisateur 24, tels que clavier, récepteur infrarouge de télécommande 23, afficheur. Il peut piloter également une interface d'entrée-sortie 25 avec des éléments optionnels permettant d'étendre les fonctionnalités, comme un modem téléphonique 26 ou un interface rapide 28 pour connexion à un micro-ordinateur. Le processeur est également généralement relié à un connecteur 29 de réception d'une carte à micro-circuit ou carte à puce, contenant par exemple les circuits de calcul d'une clé de désembrouillage.

Le module 18 a un processeur 30 relié par un bus 32 à des mémoires. Classiquement ces mémoires comportent :
- une mémoire morte 34, non volatile et non reprogrammable sauf intervention matérielle, directement adressable par le processeur,
- une mémoire vive volatile de travail 36, directement adressable par le processeur et destinée à la manipulation des données.

Pour permettre la mise en oeuvre de l'invention, les mémoires comporteront également des espaces mémoires supplémentaires permettant notamment de stocker :
- un programme chargeur d'initialisation et de démarrage ou programme d'amorce, qualifié de "boot loader", situé dans une zone mémoire non volatile, protégée, non-réinscriptible, (le caractère non réinscriptible de la zone pouvant être obtenu par exemple par masquage à la fabrication) ;
- le logiciel opérationnel complet d'un bouquet numérique particulier à un opérateur privé, et cela dans une zone réinscriptible.

Dans le cas illustré sur la figure 1, les mémoires comportent dans ce but :
- une mémoire non volatile reprogrammable 38, directement adressable par le processeur, destinée à recevoir le logiciel d'application, telle qu'une mémoire flash ; cette mémoire peut être prévue pour mémoriser les programmes spécifiques de plusieurs bouquets si la plateforme est prévue pour permettre de zapper sans avoir à attendre un rechargement ; elle contiendra en général le logiciel opérationnel ;
- une mémoire non volatile 40 destinée à recevoir des données de configuration du décodeur ; cette mémoire, qui n'est pas obligatoirement adressable par le processeur, peut être une mémoire morte reprogrammable électriquement ou EEPROM ;

La mémoire morte 34 peut être une partie non modifiable de la mémoire 38, si cette dernière est une mémoire flash.

L'architecture logicielle du décodeur peut être considérée comme comportant trois niveaux ou couches de fonctionnalité, la couche d'attaque, la couche système et la couche d'applications interactives.

La couche d'attaque ou "driver" est spécifique et adaptée à l'architecture matérielle. C'est elle qui permet de mettre en oeuvre les fonctions matérielles offertes par le décodeur.

La couche système gère la plateforme et offre les services généraux, dont le moteur d'application, nécessaires à son fonctionnement et les services appelés par les applications interactives. Pour remplir cette fonction, la couche système comportera généralement un interpréteur, permettant de transformer un code source en code objet. En revanche, un compilateur n'est pas nécessaire car il suffit que la transformation s'effectue à chaque nouvelle utilisation de la couche système.

Enfin la çouche d'applications interactives assure l'interactivité locale et utilise le moteur d'application ; elle peut également être prévue pour constituer interface avec le modem 26 de liaison avec une ligne téléphonique. Cette couche comporte des applications d'interface avec l'utilisateur, qui font appel aux services offerts par la couche système.

Les applications et les ressources associées sont pour partie résidentes, c'est-à-dire mémorisées de manière permanente en mémoire morte du décodeur, et pour partie téléchargées par la couche système à partir du signal de télévision à la norme MPEG2.

Les applications d'interface avec l'utilisateur sont généralement écrites en langage script. La couche système interprète les informations en langage script et gère l'activation et le téléchargement des applications interactives. Cette couche système est chargée sur la plateforme en un code directement interprétable par le processeur 30.

Le passage d'un bouquet à un autre correspond principalement à une reconfiguration des mémoires.

### Opérations de téléchargement

Le téléchargement d'un programme d'application se déroule de la façon suivante.

Le changement de bouquet implique de charger la totalité du logiciel permettant de traiter le bouquet, et cela indépendamment des particularités du mode de contrôle d'accès.

Pour cela, il doit y avoir chargement ou changement des logiciels résidant dans le décodeur, ce qui se fait par réinitialisation de l'ensemble de la mémoire de programmes 38, généralement une mémoire flash.

Les données qui sont transmises à la plateforme lors du téléchargement pour réinitialiser la mémoire flash 38 sont les mêmes pour toutes les plateformes ayant la même constitution matérielle.

Le schéma de la figure 2 correspond au cas d'un téléchargement utilisant la partie "données" du flux diffusé. Le logiciel à charger se présente sous forme d'un fichier. Dans la plate-forme, il est extrait et adressé en mémoire vive 36 où il est réassemblé avant d'être écrit dans la mémoire de programmes 38 qui contiendra donc finalement les couches d'attaque, système et d'applications, y compris le moteur d'applications.

Dans d'autres cas, le téléchargement peut se faire par l'interface d'entrée-sortie 25, à l'aide d'un modem ou d'un micro-calculateur.

Le téléchargement comporte dans tous les cas, au niveau du diffuseur, la génération des fichiers image à écrire en mémoire de programme 38 de la plateforme. Ces fichiers peuvent avoir des natures très diverses :
- fichiers objet déjà compilés,
- applications écrites en langage script,
- autres fonctions, telles que bibliothèque.

Les fichiers "image" ainsi constitués sont ensuite formatés pour les adapter au mode de transmission retenu, c'est-à-dire soit par le réseau de diffusion des programmes de télévision, soit par le réseau filaire.

Dans les deux cas, la première opération effectuée dans la plateforme, lors de la réception des fichiers, est un filtrage de sélectivité, afin que seuls soient chargés les programmes d'applications provenant d'un fournisseur de programmes bien déterminé. Cette opération peut être accompagnée, comme on le verra plus loin, du contrôle d'une signature électronique dans l'en-tête du flux de données constituant le logiciel d'application à charger.

### Filtrage

Le filtrage de sélectivité permet de ne charger le programme d'applications que dans des plateformes identifiées et de le charger dans toutes ces plateformes. Or il existe, à un moment donné, de nombreux types de plateformes en service, contenant en général des logiciels différents. Si les plateformes, bien que de types différents, sont initialement prévues pour un même opérateur ou fournisseur de programmes, elles comportent le même moteur d'applications. Mais ce moteur d'applications change lorsqu'on passe d'une plateforme programmée pour recevoir le bouquet d'un fournisseur ou opérateur particulier à une plate-forme programmée pour un autre opérateur : il devra être remplacé en mémoire d'applications.

Parmi les éléments qui peuvent changer suivant l'origine du décodeur et l'architecture matérielle du décodeur, on peut citer:
- le fabricant du décodeur, qui utilise souvent une architecture propriétaire,
- le mode d'acquisition du décodeur (achat, achat avec subvention dédiant le décodeur à un opérateur particulier pour une durée déterminée, location) qui peut se traduire par des fonctions de contrôle d'accès et donc des couches système différentes,
- la date d'acquisition, le logiciel pouvant avoir été modifié dans le temps.

Tous ces éléments seront inclus dans un identifiant du décodeur, qui peut comporter notamment les champs suivants :
C₁ : identification du fabricant,
C₂ : version de la plateforme matérielle,
C₃ : mode d'acquisition (location, vente subventionnée, vente non subventionnée, etc.),
C₄ : identification du logiciel, indiquant la version courante du logiciel chargée dans le décodeur,
C₅ : numéro de série individuel du décodeur.

Le champ C₄, contrairement aux autres, sera modifié à chaque téléchargement.

Pour permettre le filtrage, un identifiant est prévu dans chaque décodeur et chaque flux de données représentant un logiciel d'applications comportera des paramètres permettant de n'effectuer des opérations de rechargement ou de mise à jour que sur les décodeurs appropriés.

Cet en-tête comportera des champs affectés chacun à un de ces paramètres.

La figure 3 montre, à titre d'exemple, une constitution possible d'en-tête d'un flux de données ; cet en-tête est constitué par un bloc de N octets, précédé d'un octet indiquant le nombre N.

A chaque champ du décodeur correspond soit un seul filtre de sélection matérialisé par le champ correspondant de l'en-tête, soit plusieurs. Le chargement dans un décodeur n'est possible que lorsque toutes les opérations de filtrage donnent un résultat positif.

Le premier champ C₁ peut se limiter à un seul filtre F₁, inscrit en mémoire morte, indiquant le fabricant concerné par son numéro d'identification ID.

Le second champ C₂ peut comporter plusieurs filtres, correspondant à des versions différentes de la plateforme, et un opérateur de filtrage constitué par une fonction OU : il suffit, pour que le résultat du filtrage soit positif, que l'un des filtres F₂ᵢ inscrits en mémoire morte soit identique à C₂.

Le champ C₃ peut être constitué par un filtre unique F₃, l'opérateur de filtrage étant alors une intersection. Le résultat du filtrage est positif si C₃ΛF₃ est non nul.

Le champ C₄ comporte un unique filtre F₄ et l'opérateur de filtrage est alors la comparaison C₄(F₄ : il faut en effet que le chargement soit effectué sur tout décodeur non encore mis à jour.

Le champ C₅ sera généralement plus long que les autres et comportera par exemple 32 bits ; il contiendra par exemple plusieurs filtres F₅ⱼ qui donnent chacun une limite inférieure et une limite supérieure, identifiant une série de décodeurs sur lesquels une mise à jour doit être effectuée. Le résultat du filtrage est positif si la valeur contenue dans le champ C₅ de l'identifiant est comprise entre les deux valeurs données par un au moins des filtres F₅ⱼ.

Le champ C₆ indique l'opérateur (ou les opérateurs) auprès duquel un abonnement a été souscrit. Il comporte un ou plusieurs filtres F₆ inscrits en mémoire ré-inscriptible.

### Adressage

Les données à inscrire dans la mémoire d'applications 38 sont transmises au décodeur avec l'indication de l'adresse à laquelle elles doiventt être recopiées dans la mémoire 38.

Il peut arriver, notamment lorsqu'une mémoire vive de formatage 36 est placée en amont de la mémoire programme 38, que l'acquisition des données de programmation complète ne puisse se faire en une seule opération et avec une seule adresse.

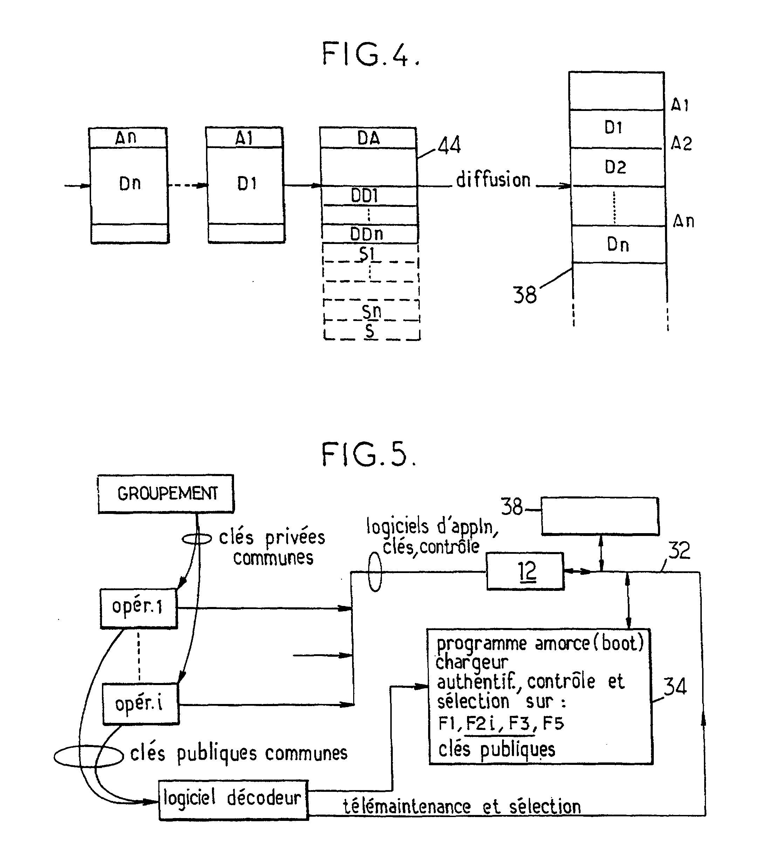

Dans ce cas, les données représentatives du logiciel à télécharger sont transmises au décodeur sous forme de blocs successifs de données contiguës et les données d'un bloc sont recopiées à une même adresse de la mémoire de programme 38. Le séquencement du chargement d'un logiciel en mémoire programme 38 peut alors être celui schématisé en figure 4. Les blocs de données successifs comportent chacun une adresse de départ A₁, ..., Aₙ indiquant une adresse en mémoire de programmes 38, la partie données D₁, ..., Dₙ et un code correcteur d'erreur. Ils sont précédés de l'envoi d'un bloc d'en-tête 44 ayant un descripteur d'application DA et des descripteurs DD₁, ..., DDₙ des blocs successifs. Les adresses de départ permettent l'inscription immédiate en mémoire de programmes 38.

Le bloc d'en-tête identifie l'application à charger et donne la liste des blocs qui la composent. Les blocs de données composant l'application sont générées à partir des blocs image auxquels sont ajoutées des informations de sécurisation du transport, constituées par un code de détection (et éventuellement de correction d'erreur). Il peut notamment s'agir d'un code cyclique redondant, généralement désigné par l'abréviation CRC.

Pratiquement, le téléchargement en cas de chargement d'abonnement s'effectue de la façon suivante. Après mise sous tension, l'abonné utilisateur déclenche le programme de téléchargement (downloader) par action surune ou des touches spécifiques de sa télécommande. Ce programme présente un menu permettant à l'utilisateur de saisir à l'aide de sa télécommande des paramètres du transpondeur maître (home transponder) du nouveau bouquet (au minimum fréquence, polarisation, taux du code correcteur d'erreur et débit symbole). Pour faciliter cette tâche, ces informations peuvent être introduites sous forme compacte, par exemple sous forme d'un nombre de quelques chiffres décimaux donné par l'opérateur lors de la prise d'abonnement. L'appui sur la touche de validation lance le téléchargment. Ce téléchargement implique des fonctions de contrôle et de sélection utilisant les champs C₁-C₆. Il y a en effet :
- contrôle de l'opérateur, du numéro de version, du fabricant,
- sélection de numéro de version, du fabricant, de la série, cette sélection pouvant s'effectuer sans processus d'authentification.

Comme on l'a indiqué plus haut, le téléchargement est sécurisé, de façon à interdire :
- les téléchargements de données qui ne sont pas transmises par un opérateur autorisé,
- les téléchargements de données dans une plateforme qui n'est pas autorisée à les recevoir.

La sécurisation peut être basée sur un chiffrement à clés privées et/ou publiques. On sait que le chiffrement à clé publique utilise un algorithme difficilement réversible, tel que la connaissance de la clé publique et du message chiffré ne permet pas, sans des calculs de durée irréaliste, de remonter au message d'origine.

La figure 4 montre, en tirets, des ajouts à effectuer à l'en-tête 44 pour sécuriser le message.

A chaque bloc de données est associée une signature S₁, ..., Sₙ qui est incluse dans l'en-tête. La signature, calculée à partir des données du bloc respectif, permet de verifier l'authenticité de ce bloc.

De plus, l'en-tête comporte une signature qui est transmise sous une forme chiffrée S. L'algorithme de chiffrement de la signature du bloc d'en-tête sera un algorithme à clé privée, par exemple de type RSA. La clé privée n'est détenue que par le constructeur. Le calcul de la signature non chiffrée à partir de la signature chiffrée S s'effectue dans le décodeur par un algorithme à clé publique stocké dans la mémoire morte 34 ou dans une zone protégée de la mémoire programme 38, s'il s'agit d'une mémoire flash.

La signature S permet de vérifier l'authenticité du bloc d'en-tête, donc des données qu'il transporte, et en particulier des signatures S₁, ..., Sₙ.

La répartition des clés et des fonctions lorsque plusieurs opérateurs 1, ..., i se groupent pour utiliser des clés privées communes peut être celle donnée en figure 5. A partir des clés privées communes, les opérateurs fournisent au fabricant du logiciel de décodeur les clés publiques qui sont inscrites en mémoire morte 34 en même temps que les filtres F₁, F₂ᵢ, F₅ⱼ.

Les instructions de démarrage du décodeur lors de la mise en service sont stockées également en mémoire morte, ainsi que le chargeur de mise à jour du terminal. Pour pallier les cas de corruption de la mémoire programme 38, notamment s'il s'agit d'une mémoire flash, due à une interruption pendant le chargement, la fonction de mise à jour du terminal est associée directement à la fonction de démarrage du processeur du décodeur, lorsqu'une corruption est constatée.

L'invention permet de faire évoluer les relations entre opérateurs et utilisateurs de façon simple. Du fait que l'identification de l'opérateur est, à l'inverse des autres paramètres situés en ROM, mémorisée en mémoire flash, il est possible de ré-affecter un décodeur loué lorsqu'il est restitué. Un décodeur peut être "libéré" de tout lien avec un opérateur particulier. La sélection s'effectue par des opérations logiques simples et être implicite par défaut.

Dans le cas particulier d'une diffusion conforme à la norme MPEG2, les données de mise à jour et de chargement de logiciel d'application sont transportées dans un service DVB de données privées, du type désigné dans la norme comme "terminal update". Les blocs constitutifs du logiciel à charger sont découpés en éléments d'une taille maximum de 4064 octets, chaque élément ayant un en-tête de 16 octets. L'identification d'un service de mise à jour ou de rechargement d'un logiciel s'effectue à partir des données de signalisation du réseau.

Le procédé de téléchargement de logiciel d'application suivant l'invention n'interfère absolument pas avec les téléchargements de mise à jour du logiciel de l'opérateur courant, c'est-à-dire de celui auprès duquel l'usager a pris un abonnement.

## Revendications

1. Procédé de téléchargement de logiciel opérationnel propre à un opérateur parmi plusieurs dans une plateforme banalisée de décodeur de télévision numérique, suivant lequel :
- on mémorise une fois pour toutes, à la construction, dans une zone mémoire protégée et non réinscriptible de la plateforme, un chargeur d'initialisation et de démarrage comportant des champs de filtrage (C1-C6) propres au décodeur,
- on diffuse périodiquement, dans le signal de télévision numérique provenant de chacun des opérateurs ayant passé un accord avec le constructeur et prévus pour être accessibles, un message identifiant la plate-forme et contenant le logiciel opérationnel rendant la plateforme apte à décoder le flux de données du signal de télévision de cet opérateur et à traiter ses services, lesdits messages comportant une signature électronique,
- à la réception, sur commande de sélection de l'utilisateur, les messages contenant le logiciel opérationnel et identifiant la plate-forme et l'opérateur sont filtrés à l'aide des champs de filtrage (C1-C6) et écrits en mémoire réinscriptible de programme (38) .

2. Procédé selon la revendication 1, **caractérisé en ce que** le logiciel opérationnel est transmis sous forme de données à programmer dans ladite mémoire inscriptible, en blocs de données recopiés chacun à une adresse (A₁, ..., Aₙ) de la mémoire inscriptible fournie dans un en-tête du bloc.

3. Procédé selon la revendication 2, **caractérisé en ce que** l'on fait précéder les blocs de données d'un bloc d'en-tête comprenant une description de l'application et de chacun des blocs de données.

4. Procédé selon la revendication 3, **caractérisé en ce que** chaque bloc de données comporte un code de correction d'erreur, tel qu'un code cyclique redondant.

5. Procédé selon la revendication 3 ou 4, **caractérisé en ce que** l'en-tête comporte au moins un des champs suivants :
- identification (C₁) du fabricant de la plateforme ;
- version (C₂) de la plateforme matérielle,
- mode d'acquisition du décodeur (C₃),
- identification de la version courante du logiciel (C₄) et
- numéro de série individuel du décodeur (C₅).

6. Procédé selon la revendication 2, **caractérisé en ce que** des informations SI ou PSI associées aux messages diffusés et contenant des logiciels opérationnels comportent au moins l'un des champs suivants :
- identification du fabricant de la plateforme ;
- version de la plateforme matérielle,
- mode d'acquisition du décodeur,
- identification de la version courante du logiciel et
- numéro de série individuel du décodeur.

7. Procédé selon la revendication 4, 5 ou 6, **caractérisé en ce que** chacun des blocs de données est associé à une signature chiffrée incluse dans l'en-tête et **en ce que** l'en-tête lui-même comporte une signature chiffrée.

8. Installation de téléchargement de logiciel d'application dans des plateformes de décodeur de télévision numérique, comprenant :
- dans chaque plateforme; un module de traitement banalisé indépendant d'opérateur contenant des clés didentification et assurant : l'extraction d'un flux de données représentant un logiciel opérationnel spécifique du bouquet offert par un opérateur et provenant de celui de plusieurs opérateurs qui est sélectionné à cet instant par l'utilisateur, l'authentification par mise en oeuvre des clés d'identification et l'inscription du logiciel dans une mémoire programmable (38) réinscriptible de stockage dudit logiciel et la commande du décodeur pour exploiter les services identifiés par le logiciel, et
- au niveau du diffuseur, des moyens pour insérer de façon répétitive, dans le flux de données numériques diffusé, d'une part une séquence de blocs représentant ledit logiciel spécifique, et d'autre part des informations décrivant les caractéristiques des décodeurs seuls destinés à être chargés.

9. Installation selon la revendication 8, **caractérisée en ce que** le module de traitement comprend, en plus de la mémoire réinscriptible (38), un processeur (30), une mémoire vive volatile de travail (36) directement adressable par le processeur, et une zone mémoire non volatile (34), protégée, non réincriptible, sécurisée en accès.

10. Installation selon la revendication 9, **caractérisée en ce que** la zone mémoire non volatile et protégée (34) fait partie d'une mémoire flash (38).

## Claims

1. A method of downloading operating software specific to one of a plurality of operators into a general-purpose digital television decoder platform, comprising:
· storing a boot loader including filter fields (C1-C6) specific to the decoder definitively by construction in a protected and non-rewritable memory zone of the platform;
· periodically broadcasting a message identifying the platform and containing the operating software making the platform suitable for decoding the data stream of the television signal of the operator and for processing its services in the digital television signal that comes from each of the operators that having made an agreement with the manufacturer and that is designed to be accessible, each of said messages having an electronic signature;
· on reception, filtering the messages containing the operating software and identifying the platform and the operator , in response to a user selection command, by means of the filter fields (C1-C6) and writing the messages into a rewritable program memory (38).

2. A method according to claim 1, **characterized in that** the operating software is transmitted in the form of data to be programmed in said writable memory, in the form of data blocks each copied at a respective address (A₁, ..., Aₙ) of the writable memory and supplied in a header of the block.

3. A method according to claim 2, **characterized in that** the data blocks are preceded by a header block comprising a description of the application and of each of the data blocks.

4. A method according to claim 3, **characterized in that** each data block includes an error correction code, such as a cyclic redundancy code.

5. A method according to claim 3 or 4, **characterized in that** the header includes at least one of the following fields:
· identity (C₁₎ of the platform manufacturer;
· hardware version (C₂) of the platform;
· mode whereby the decoder was acquired (C₃);
· identity of the current version of the software (C₄); and
· individual serial number of the decoder (C₅).

6. A method according to claim 2, **characterized in that** the SI or PSI information associated with the broadcast messages and containing operating software include at least one of the following fields:
· identity of the platform manufacturer;
· hardware version of the platform;
· decoder acquisition mode;
· identity of the current version of the software; and
· individual serial number of the decoder.

7. A method according to claim 4, 5, or 6, **characterized in that** each of the data blocks is associated with an encrypted signature included in the header and **in that** the header also includes an encrypted signature.

8. An installation for downloading application software into digital television decoder platforms, the installation comprising:
· in each platform, a general-purpose processor module that is independent of any operator, that contains identification keys, and that implements : extraction of a data stream representing operating software specific to the program pack offered by an operator and coming from that one of a plurality of operators that is selected at that time by the user, authentication of the software by use of the identification keys and recording of the software in a rewritable memory (38) for storing said software, and control of the decoder to implement the services identified by the software; and
· at the broadcaster, means for repetitively inserting, in the broadcast digital data stream, both a sequence of blocks representing said specific software and information describing the characteristics of only those decoders that are to be loaded.

9. An installation according to claim 8, **characterized in that** the processor module comprises, in addition to the rewritable memory (38), a processor (30), a volatile read and write memory (36) that is directly accessible by the processor, and a non-volatile memory zone (34) which is protected, not rewritable, and which has secure access.

10. An installation according to claim 9, **characterized in that** the protected non-volatile memory zone (34) forms part of a flash memory

## Patentansprüche

1. Verfahren zum Fernladen von einem Betreiber unter mehreren zugehöriger Operationssoftware in eine Universaldekoderplattform des digitalen Fernsehens, gemäß welchem
- bei der Herstellung ein für alle Male in einer geschützten und nicht wiederbeschreibbaren Speicherzone der Plattform ein Initialisierungs- und Startlader gespeichert wird, der dem Dekoder eigene Filtrierfelder (C1-C6) aufweist,
- in dem digitalen Fernsehsignal, das von jedem der Betreiber kommt, die eine Vereinbarung mit dem Hersteller getroffen haben und dafür vorgesehen sind, zugänglich zu sein, periodisch eine Mitteilung verbreitet wird, die die Plattform identifiziert und die Operationssoftware enthält, die die Plattform in die Lage versetzt, den Datenfluss des Fernsehsignals dieses Betreibers zu dekodieren und seine Dienste zu verarbeiten, wobei diese Mitteilungen eine elektronische Signatur enthalten,
- die Mitteilungen, die die Operationssoftware enthalten und die Plattform und den Betreiber identifizieren, bei Empfang auf Wahlanforderung des Benutzers mit Hilfe der Filtrierfelder (C1-C6) gefiltert und in den wiederbeschreibbaren Programmspeicher (38) eingeschrieben werden.

2. Verfahren nach Anspruch 1, **dadurch gekennzeichnet, dass** die Operationssoftware in Form von zu programmierenden Daten in den beschreibbaren Speicher in Datenblöcken übertragen wird, die jeweils an einer in einem Kopfteil des Blocks gelieferten Adresse (A₁,...,Aₙ) umkopiert werden.

3. Verfahren nach Anspruch 2, **dadurch gekennzeichnet, dass** man den Datenblöcken einen Kopfblock vorhergehen lässt, der eine Beschreibung der Anwendung und jedes der Datenblöcke enthält.

4. Verfahren nach Anspruch 3, **dadurch gekennzeichnet, dass** jeder Datenblock einen Fehlerkorrekturkode wie einen redundanten zyklischen Kode aufweist.

5. Verfahren nach Anspruch 3 oder 4, **dadurch gekennzeichnet, dass** der Kopfteil mindestens eines der folgenden Felder umfasst:
- Identifizierung (C₁) des Herstellers der Plattform,
- Version (C₂) der materiellen Plattform,
- Erfassungsart des Dekoders (C₃),
- Identifizierung der gängigen Version der Software (C₄) und
- individuelle Seriennummer des Dekoders (C₅).

6. Verfahren nach Anspruch 2, **dadurch gekennzeichnet, dass** SI- oder PSI-Informationen, die den verbreiteten Mitteilungen zugeordnet sind und Operationssoftwares enthalten, mindestens eines der folgenden Felder aufweisen:
- Identifizierung des Herstellers der Plattform,
- Version der materiellen Plattform,
- Erfassungsart des Dekoders,
- Identifizierung der gängigen Version der Software und
- individuelle Seriennummer des Dekoders.

7. Verfahren nach Anspruch 4, 5 oder 6, **dadurch gekennzeichnet, dass** jedem der Datenblöcke eine Ziffernsignatur zugeordnet ist, die in den Kopfteil eingeschlossen ist, und dass der Kopfteil selbst eine Ziffernsignatur aufweist.

8. Anlage zum Fernladen von Anwendungssoftware in Dekoderplattformen des digitale Fernsehens, umfassend:
- in jeder Plattform ein unabhängiges universelles Betreiber-Verarbeitungsmodul, das Identifizierungsschlüssel enthält und gewährleistet: die Extraktion eines Datenflusses, der eine spezielle Operationssoftware des von einem Betreiber angebotenen Pakets darstellt und von demjenigen von mehreren Betreibern kommt, der zu diesem Zeitpunkt vom Benutzer ausgewählt ist, Authentifizierung durch Anwendung der Identifizierungsschlüssel und Einschreiben der Software in einen wiederbeschreibbaren programmierbaren Speicher (38) zum Speichern dieser Software und Steuerung des Dekoders zur Nutzung der durch die Software identifizierten Dienste, und
- auf Höhe des Verbreiters, Mittel zum repetitiven Einfügen in den verbreiteten digitalen Datenfluss einerseits von einer diese spezielle Software darstellenden Sequenz von Blöcken und andererseits von Informationen, die die Merkmale der Dekoder beschreiben, die allein dazu bestimmt sind, geladen zu werden.

9. Anlage nach Anspruch 8, **dadurch gekennzeichnet, dass** das Verarbeitungsmodul zusätzlich zu dem wiederbeschreibbaren Speicher (38) einen Prozessor (30), einen flüchtigen Lebendarbeitsspeicher (36), der durch den Prozessor direkt adressierbar ist, und eine geschützte, nicht wiederbeschreibbare, nicht flüchtige, zugangsgesicherte Speicherzone (34) umfasst.

10. Anlage nach Anspruch 9, **dadurch gekennzeichnet, dass** die nicht flüchtige und geschützte Speicherzone (34) Teil eines Flash-Speichers (38) bildet.
